# EUROPEAN PATENT APPLICATION

(11) **EP 1 835 704 A2**
(43) Date of publication of application: **19.09.2007**
(21) Application number: 07104126.3
(22) Date of filing: 14.03.2007
(51) Int. Cl.: H04M 1/02

(54) **Wrist wearable type portable terminal**

(30) Priority: 17.03.2006 KR 20060024822
(71) Applicant: Samsung Electronics Co., Ltd., Suwon-si, Gyeonggi-Do (KR)
(72) Inventor: Kim, Joon-Suh, Suwon-si Gyeonggi-do (KR); Lee, Chang-Soo, Suwon-si Gyeonggi-do (KR)
(74) Representative: Zimmer, Franz-Josef

(57) **Abstract**

Provided is a wrist wearable type portable terminal. A portable terminal that is wearable on a user's body includes a first main body (100) including a first user interfacing unit (110), a second main body (200) including a second user interfacing unit (210) and being spaced apart from the first main body (100), and at least one wristband (150, 160) for connecting the first main body (100) and the second main body (200) with each other to allow wearing on a user's wrist.

## Description

### BACKGROUND OF THE INVENTION

### 1. Field of the Invention

The present invention relates generally to a portable terminal such as a Digital Multimedia Broadcasting (DMB) phone, a game phone, a chatting phone, a camera phone, an MP3 phone, a cellular phone, a Personal Communication Service (PCS) phone, a Personal Digital Assistant (PDA), and a Hand Held Phone (HHP), and in particular, to a slim wrist wearable type portable terminal.

### 2. Description of the Related Art

In general, a "portable terminal" refers to an electronic apparatus carried with a user to perform wireless communication. In terms of portability, designs of such portable terminals tend to be compact, slim, and lightweight, and also include multimedia availability for a wide variety of functions. Future portable terminals are expected to incorporate greater multi-functionality and multipurpose utilization. Future portable terminals will also be more compact and lightweight and will be so modified to be suitable for various multimedia environments or Internet environments.

Conventional portable terminals may be classified into various types according to their appearance. For example, conventional portable terminals may be classified as bar-type portable terminals, flip-type portable terminals, and folder-type portable terminals. The bar-type portable terminal has a single housing shaped like a bar. The flip-type portable terminal has a flip which is pivotably mounted to a bar-shaped housing by a hinge device. The folder-type portable terminal has a folder coupled to a single bar-shaped housing by a hinge device to allow the folder to be rotated in order to be folded towards or unfolded away from the housing.

Further, portable terminals may be classified into neck wearable type portable terminals and wrist wearable type portable terminals according to the position in which a user puts on the portable terminal. The neck wearable type portable terminal is worn by a user around the neck using a string, while the wrist wearable type portable terminal is worn by a user around the wrist.

Additionally, portable terminals may be further classified as rotation-type portable terminals and sliding-type portable terminals based upon the manner in which the portable terminals are opened or closed. In the rotation-type portable terminal, two housings are coupled to each other to allow one housing to rotate open or closed relative to the other while facing each other. In the sliding-type portable terminal, two housings are coupled to each other to allow one housing to slide along a longitudinal direction to open or close the sliding-type portable terminal. These variously classified portable terminals can be easily understood by those skilled in the art.

The conventional portable terminal is generally carried by being held in a user's hand or being put into pockets of tops or bottoms or bags. For convenience in carrying, the portable terminal is worn in a specific position of a user's body, e.g., around a neck, on an ear, on a back head, or around a wrist. It is expected that wearing of the portable terminal on a specific position of a body will become common in use in the near future.

Korean Patent Application No. 1999-41177 filed by the present assignee discloses a watch type portable terminal that is worn around a wrist.

However, in the conventional wrist wearable portable terminal, essential parts such as a data input device, a data output device, a microphone, a speaker, an antenna, and a battery pack have to be mounted in a limited space of a single main body, increasing the thickness or the entire size of the main body.

In other words, a wrist wearable portable terminal having a thick main body is inconvenient for the user to wear on his/her wrist. Moreover, when the main body is thick or large, its exterior design is not attractive and a plurality of parts have to be mounted in a limited space on the main body. Even if the main body has a small size, inconvenience is caused in data input/output operations.

Furthermore, the foregoing problems eventually hinder an optimal interface environment from being provided to the user.

### SUMMARY OF THE INVENTION

It is, therefore, the object of the present invention to provide a wrist wearable type portable terminal, in which a first main body and a second main body, that are spaced apart from each other, are connected to a wristband, thereby reducing main body thickness when compared to a conventional portable terminal having a single main body. This object is solved by the subject matter of the independent claim.

It is another aspect of the present invention to provide a wrist wearable type portable terminal that is easy to wear around a wrist by providing a wristband made of an elastic material.

It is still another aspect of the present invention to provide a wrist wearable type portable terminal that can be conveniently used through a structure in which an interfacing unit using a wireless communication means can be detached from a main body and can be replaced with another, and that is easy to use, especially in various modes.

It is still further another aspect of the present invention to provide a wrist wearable type portable terminal, in which a data input device is detachable for one of convenient dialing and message transmission.

It is another aspect of the present invention to provide a wrist wearable type portable terminal, in which a data input device can be easily detached.

In order to achieve an aspect of the present invention, there is provided a portable terminal that is wearable on a user's body. The portable terminal includes a first main body including a first user interfacing unit, a second main body including a second user interfacing unit and being spaced apart from the first main body, and at least one wrist band for connecting the first main body and the second main body with each other to allow wearing on a user's wrist.
According to another aspect of the present invention, there is provided a portable terminal that is wearable on a user's body. The portable terminal includes a first main body including a first user interfacing unit, a second main body including a second user interfacing unit that is detachable from the first main body and facing the first main body, and at least one wrist band for connecting the first main body and the second main body with each other to allow wearing on a user's wrist.

### BRIEF DESCRIPTION OF THE DRAWINGS

The above and other aspects, features and advantages of the present invention will become more apparent from the following detailed description when taken in conjunction with the accompanying drawings in which:
FIG. 1 is a perspective view illustrating a top portion of a wrist wearable type portable terminal according to the present invention;
FIG. 2 is a front view of FIG. 1;
FIG. 3 is a side view of FIG. 1;
FIG. 4 is a perspective view illustrating a bottom portion of a wrist wearable type portable terminal according to the present invention;
FIG. 5 is a perspective view illustrating a state in which a second user interfacing unit according to the present invention is being detached;
FIG. 6 is a perspective view illustrating a state in which a second user interfacing unit according to the present invention has been detached; and
FIG. 7 illustrates a wrist wearable type portable terminal according to the present invention that is being used.

### DETAILED DESCRIPTION OF THE PREFERRED EMBODIMENT

A preferred embodiment of the present invention will now be described in detail with reference to the accompanying drawings. In the following description, a detailed description of known functions and configurations incorporated herein has been omitted for conciseness.

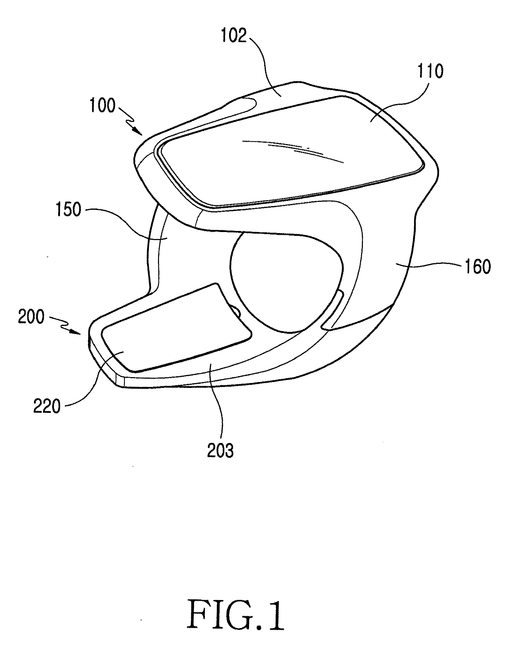

As illustrated in FIGs. 1 through 3, a portable terminal according to the present invention is worn in a specific position on a user's body, particularly on a user's wrist like a wristwatch. The portable terminal includes a first main body 100, a second main body 200, and wrist bands 150 and 160 for connecting the first main body 100 and the second main body 200 with each other to allow wearing around the user's wrist.

The first main body 100 includes a first user interfacing unit 110. The first user interfacing unit 110 is fixed onto a top portion 102 of the first main body 100. The first user interfacing unit 110 is disposed on the top portion 102 of the first main body 100 and is implemented with a display device, specifically a Liquid Crystal Display (LCD) or a device having an optical system using hologram. The first user interfacing unit 110 may also be implemented with a touch screen used as a data input/output device.

The second main body 200 includes a second user interfacing unit 210. The second user interfacing unit 210 serves as a data input device including a plurality of keys 212. The keys 212 include number keys, a send key, and an end key. The keys 212 are in a 3x4 matrix.

The second user interfacing unit 210 is disposed on a top portion 202 of the second main body 200 and a power supply device 220 is disposed in a bottom portion 203 of the second main body 200. The power supply device 220 may be implemented with a battery pack including a plurality of battery cells (not shown) or with a coin-type battery protected inside the second main body 200.

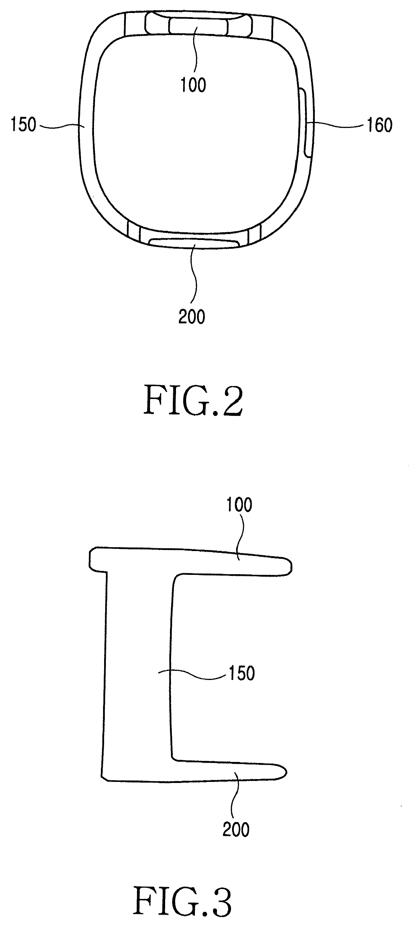

As illustrated in FIGs. 1 and 2, the wristbands 150 and 160 are paired with each other and face each other between the first main body 100 and the second main body 200. Moreover, the first main body 100 and the second main body 200 face each other between the wristbands 150 and 160. It is preferable that the first main body 100 and the second main body 200 are symmetrical to each other. The wristbands 150 and 160 are made of an elastic material for convenience in wearing. Furthermore, one wristband 160 of the wristbands 150 and 160 is made as one piece and the other 150 is made separable. In addition, a single wristband may be provided.

Both ends of each of the first main body 100 and the second main body 200, which are oriented in perpendicular relation to the length-wise direction of the first main body 100 and the second main body 200, protrude along the width-wise direction of the wristbands 150 and 160 in a direction away from each other. The length-wise direction of the first main body 100 and the second main body 200 are oriented perpendicularly or almost perpendicularly to the length-wise direction of the wristbands 150 and 160.

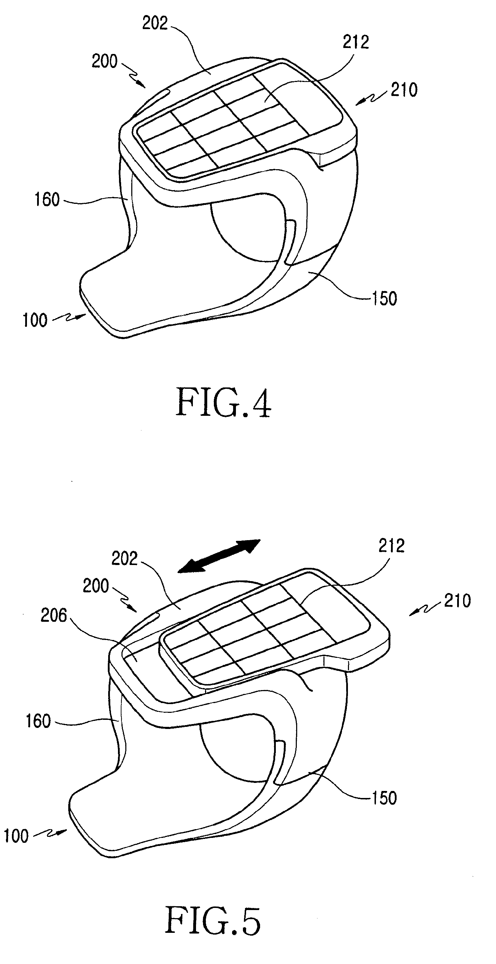

As illustrated in FIGs. 4 through 6, the second user interfacing unit 210 is detachable from the second main body 200, specifically the top portion 202 of the second main body 200. The second user interfacing unit 210 is detached by sliding while facing the second main body 200. In other words, the second user interfacing unit 210 is detached while being maintained parallel with the second main body 200. The detachable structure is not shown in the figures. While being detached from the second main body 200, the second user interfacing unit 210 communicates with the first main body 100 and the second main body 200 using a data communication means (not shown), specifically a short range communication means like a Bluetooth^{®} module or an InfraRed Data (IRDA) module. The second main body 200 includes a recess 206 having a predetermined width and a predetermined thickness on its top portion 202 to receive the second user interfacing unit 210. In the present invention, the second user interfacing unit 210 is not limited to a keypad including the plurality of keys 212. The detachable second user interfacing unit 210 can be replaced with another. For example, the data input device can be replaced with another keypad that is suitable for a phone mode, a chatting mode, or a game mode in a corresponding mode, thereby providing user with an interfacing environment that is optimal for various multimedia environments.

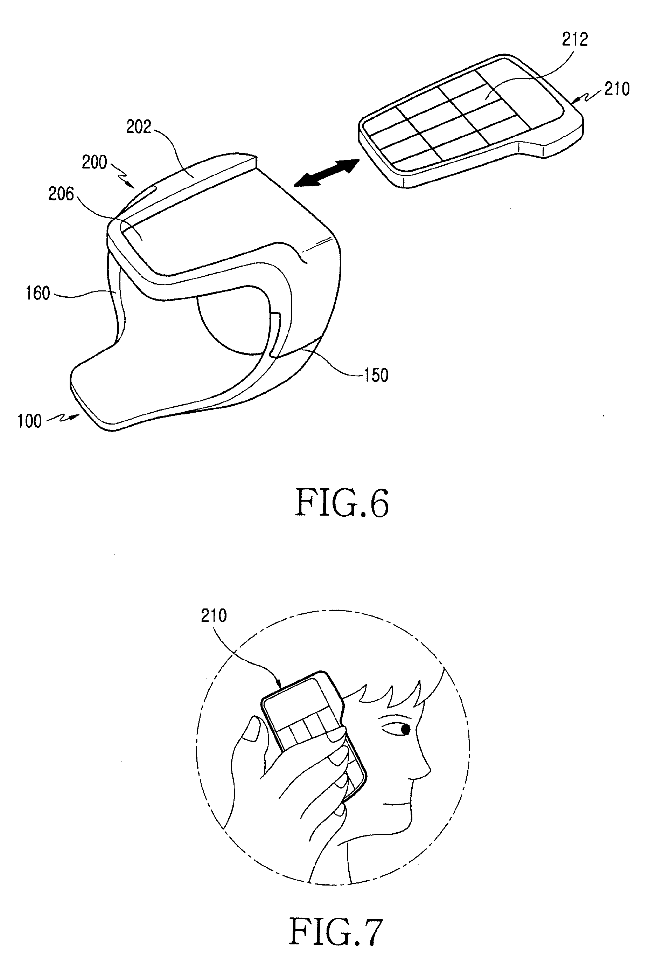

Additionally, by including a keypad composed of a plurality of keys as well as a microphone and a speaker, the second user interfacing unit 210 can allow the user to communicate with his/her partner as well as to perform a data input operation when being detached from the first main body 100, as illustrated in FIG. 7. The microphone or the speaker (not shown) is included in the first main body 100, through which the user can communicate with his/her partner by bringing the portable terminal closely to the user's ear.

As described above, according to the present invention, two main bodies 100, 200 are connected by wristbands 150, 160, thereby achieving slimness of the main bodies 100, 200. The wristbands 150, 160 are made of an elastic material for convenience in wearing around a wrist. Moreover, with an interfacingunit 210 that is detachable from a main body 200, the user can input data using a wireless communication means while viewing a display device 110 around the wrist and can perform communication with his/her partner, such as dialing or message transmission, in a phone mode. Furthermore, since the second user interfacing unit 210 can be detached by sliding, the user can easily separate the second user interfacing unit 210 from the portable terminal while wearing the portable terminal on his/her wrist. Additionally, since the second user interfacing unit 210 can be detached and replaced, it is possible to provide various interfacing environments and various uses in various multimedia environments.

## Claims

1. A portable terminal that is wearable on a user's body, comprising:
a first main body (100) including a first user interfacing unit (110);
a second main body (200) including a second user interfacing unit (210) and being spaced apart from the first main body (100); and
at least one wrist band (150, 160) for connecting the first main body (100) and the second main body (200) with each other to allow wearing on a user's wrist.

2. The portable terminal of claim 1, wherein the first user interfacing unit (110) serves as a display device and the second user interfacing unit (210) serves as a data input device.

3. The portable terminal of claim 2, wherein the first main body (100) has the first user interfacing unit (110) disposed in its top portion (102).

4. The portable terminal of claim 2, wherein the second main body (200) has the second user interfacing unit (210) disposed in its top portion (202) and a power supply (220) device disposed in its bottom portion (203).

5. The portable terminal of claim 2, wherein the second user interfacing unit (210) includes a keypad having a plurality of keys (212).

6. The portable terminal of claim 1, wherein a pair of wristbands (150, 160) are provided, and the wristbands (150, 160) are paired with each other and face each other between the first main body (100) and the second main body (200).

7. The portable terminal of claim 1, wherein the at least one wristband (150, 160) is made of an elastic material capable of stretching in the length-wise direction of the wristband (150, 160).

8. The portable terminal of claim 1, wherein both ends of each of the first main body (100) and the second main body (200) protrude along the width-wise direction of the at least one wristband (150, 160) in a direction away from each other.

9. The portable terminal of claim 1, wherein the second main body including the second user interfacing unit that is detachable from the first main body and facing the first main body.

10. The portable terminal of claim 9, wherein the second user interfacing unit (210) serves as a data input device, and communicates with the second main body (200) using a wireless communication means when being detached from the second main body (200) by sliding.

11. The portable terminal of claim 9, wherein the second user interfacing unit (210) is detached from the second main body (200) by sliding while facing the second main body (200).

12. The portable terminal of claim 9, wherein the first user interfacing unit (110) serves as a display device and the second user interfacing unit (210) includes a plurality of keys (212).

13. The portable terminal of claim 9, wherein the second main body (200) includes a recess (206) having a predetermined thickness and a predetermined width to receive the second user interfacing unit (210).
